# EUROPÄISCHE PATENTSCHRIFT

(11) **EP 2 841 235 B1**
(45) Veröffentlichungstag und Bekanntmachung des Hinweises auf die Patenterteilung: **06.01.2021**
(21) Anmeldenummer: 13722674.2
(22) Anmeldetag: 22.04.2013
(51) Int. Cl.: B25F 5/00, B25F 5/02

(54) **HANDFÜHRBARE WERKZEUGMASCHINE MIT LÜFTEREINRICHTUNG**
HAND-HELD MACHINE TOOL WITH FAN ARRANGEMENT
MACHINE-OUTIL PORTABLE DOTÉE D'UN DISPOSITIF AÉRATEUR

(30) Priorität: 24.04.2012 DE 102012103603
(43) Veröffentlichungstag der Anmeldung: 04.03.2015
(73) Patentinhaber: C. & E. Fein GmbH, 73529 Schwäbisch Gmünd-Bargau (DE)
(72) Erfinder: HESS, Achim, 71404 Korb (DE); FRÜH, Uwe, 72820 Sonnenbühl (DE); BLICKLE, Jürgen, 73035 Göppingen (DE)
(74) Vertreter: Wallinger, Michael
(86) Internationale Anmeldenummer: PCT/EP2013/001205
(87) Internationale Veröffentlichungsnummer: WO 2013/159902

(56) Entgegenhaltungen:
- EP-A1- 0 416 468
- DE-A1-102008 000 613
- GB-A- 2 459 191
- US-A- 2 155 082

## Beschreibung

Die vorliegende Erfindung betrifft eine handführbare Werkzeugmaschine, insbesondere eine handführbare Oszillations-Werkzeugmaschine mit einem sich im wesentlichen entlang einer Längsachse erstreckenden Außengehäuse und einer Lüftereinrichtung.

Aus dem Stand der Technik sind handführbare Werkzeugmaschinen mit Lüftereinrichtungen bekannt, bei welchen ein angesaugter Kühlluftstrom mittels Lenkeinrichtungen in mehrere Kühlluftströme aufgeteilt und diese durch verschiedene Bereiche des abgesehen von Kühllufteintritts- und Austrittsöffnungen weitgehend gegenüber der Umgebung abgedichteten Werkzeugmaschinengehäuses geführt werden. Ferner sind handführbare Werkzeugmaschinen bekannt, bei welchen mittels Umlenk- oder Filtereinrichtungen Schmutzpartikel aus der angesaugten Kühlluft entfernt werden. Solche Lenk- oder Umlenkeinrichtungen erhöhen den Strömungswiderstand und damit den Leistungsbedarf der Lüftereinrichtung.

US 2,155,082 offenbart eine Werkzeugmaschine mit Luftkühlung, bei der ein Luftstrom entweder durch ein Getriebegehäuse oder entlang dessen Oberfläche strömt.

Der Erfindung liegt die Aufgabe zugrunde, eine handführbare Werkzeugmaschine mit einem verbesserten Lüftungskonzept zur Verfügung zu stellen.

Dies wird erfindungsgemäß durch die Lehre des unabhängigen Anspruchs erreicht. Zu bevorzugende Weiterbildungen der Erfindung sind Gegenstand der Unteransprüche.

Eine erfindungsgemäße handführbare Werkzeugmaschine kann insbesondere auch eine handführbare Oszillations-Werkzeugmaschine sein. Eine solche handführbare Werkzeugmaschine weist ein sich im wesentlichen entlang einer Längsachse erstreckendes Außengehäuse mit einem Griffbereich auf, der zum Umgreifen und zum Führen der Werkzeugmaschine durch eine Hand eines Benutzers vorgesehen ist. Im wesentlichen innerhalb dieses Außengehäuses ist eine elektrische Antriebseinheit aufgenommen, welche eine Antriebswelle der Werkzeugmaschine rotierend antreibt. Dabei ist die Rotationsachse der Antriebswelle im wesentlichen parallel zu einer Längsachse des Außengehäuses ausgerichtet oder kann auch mit dieser zusammenfallen. Mit der elektrischen Antriebseinheit ist eine Werkzeugeinrichtung im wesentlichen starr gekoppelt, welche in einem ersten Endbereich des Außengehäuses angeordnet ist. Die Werkzeugeinrichtung kann dabei unmittelbar an einem ersten Ende der elektrischen Antriebseinheit angeordnet sein. Ebenso ist es auch möglich, dass die Werkzeugeinrichtung an einer anderen Einrichtung, wie beispielsweise einer Lüftereinrichtung angeordnet ist, welches bevorzugt ebenfalls im wesentlichen starr mit der elektrischen Antriebseinheit gekoppelt ist. Im Zusammenhang mit der vorliegenden Erfindung bedeutet starr gekoppelt, dass diese Einrichtungen mechanisch gekoppelt sind, und Bewegungen, auch hochfrequenter Art, wie beispielsweise Vibrationen unmittelbar von einem auf das andere Element übertragen werden. Eine starre Verbindung kann daher auch mittels einer integralen Bauweise oder dergleichen ausgeführt sein.

Das Außengehäuse der erfindungsgemäßen handführbaren Werkzeugmaschine weist eine definierte Innenkontur auf. Entsprechend weisen die elektrische Antriebseinheit und die mit dieser starr gekoppelte Werkzeugeinrichtung eine definierte Außenkontur auf, wobei die Werkzeugeinrichtung zumindest soweit eine definierte Außenkontur aufweist, soweit diese im Bereich des Außengehäuses angeordnet ist. Sofern zwischen der elektrischen Antriebseinheit und der Werkzeugeinrichtung weitere Einrichtungen wie beispielsweise eine Lüftereinrichtung angeordnet sind, deren Außenkontur sich zwischen der elektrischen Antriebseinheit und der Werkzeugeinrichtung erstreckt, so stellt diese ebenfalls einen Teil der definierten Außenkontur dar, ohne nachfolgend jeweils explizit erwähnt zu werden. Die Außenkontur dieser Antriebselemente und die Innenkontur des Außengehäuses sind derart ausgebildet, dass diese mit einem vorbestimmten Mindestabstand voneinander beabstandet sind.

Die Werkzeugeinrichtung dient zur Übertragung des Antriebsmoments der elektrischen Antriebseinheit auf ein bevorzugt an der Werkzeugeinrichtung angeordnetes Werkzeug. Zur Übertragung der Antriebsleistung der elektrischen Antriebseinheit auf ein Werkzeug kann die Werkzeugeinrichtung verschiedene Elemente wie Getriebe, Kupplungen und dergleichen aufweisen, welche sich im Betrieb erwärmen. Sowohl die elektrische Antriebseinheit als auch die Werkzeugeinrichtung sollten im Betrieb eine vorbestimmte Temperatur nicht überschreiten, um einerseits Überhitzungen der Antriebselemente selbst und andererseits der Außenbereiche der Werkzeugmaschine zu vermeiden.

Wie die Werkzeugeinrichtung kann auch die elektrische Antriebseinheit mehrteilig ausgebildet sein. Die Werkzeugmaschine weist vorzugsweise an dem der elektrischen Antriebseinheit gegenüberliegenden Ende der Werkzeugeinrichtung eine Werkzeugaufnahme auf, deren Antriebsachse auch in einem Winkel gegenüber der Antriebsachse des elektrischen Antriebselements verschwenkt angeordnet sein kann. Grundsätzlich kann die Werkzeugaufnahme an einem äußeren Ende der Antriebsachse angeordnet sein, sie kann jedoch auch in einem vom Ende der Werkzeugeinrichtung beabstandeten Bereich angeordnet sein. Beispielsweise kann die Werkzeugaufnahme auch in einer Ausnehmung im Bereich der Antriebswelle in der Werkzeugeinrichtung angeordnet sein, in welche ein Werkzeug eingesetzt werden kann. Vorzugsweise dienen mit der Werkzeugmaschine verwendbare Werkzeuge zum Schneiden, Schleifen, Sägen, Bohren, Raspeln oder zu sonstigen zerspanenden, abtragenden oder umformenden Bearbeitungsvorgängen.

Eine bevorzugte Ausführungsform der elektrischen Antriebseinrichtung erstreckt sich im wesentlichen entlang einer Längsachse, welche mit der Rotationsachse der Antriebswelle der elektrischen Antriebseinrichtung zusammenfällt. Auf der Antriebswelle ist der Anker mit den Ankerwicklungen angeordnet, welche innerhalb eines Stators mit dazugehörigem Polpaket rotieren. Dabei treibt die Antriebswelle der elektrischen Antriebseinrichtung die Antriebswelle der Werkzeugmaschine an. Der Kollektor, der auch als Kommutator bezeichnet wird, ist vorzugsweise am zweiten Ende der elektrischen Antriebseinrichtung an der Antriebswelle angeordnet. Dieser dient der Zuführung und Umschaltung eines elektrischen Stroms, insbesondere eines Netzstroms oder eines Stroms aus einer Einrichtung zur Bereitstellung elektrischer Energie, wie insbesondere einer Sekundärbatterie zur elektrischen Antriebseinrichtung. Es versteht sich jedoch, dass die Lüftereinrichtung auch mit jeder anders aufgebauten, insbesondere eine Antriebswelle rotierend antreibenden, zum Antrieb der Werkzeugeinrichtung geeigneten elektrischen Antriebseinheit verwendet werden kann.

Die definierte Außenkontur von elektrischer Antriebseinrichtung und Werkzeugeinrichtung ergibt sich bevorzugt im wesentlichen durch die Gestalt dieser Antriebselemente, die insbesondere durch deren Antriebsfunktion und durch Anforderungen an eine günstige Führung der vorbeiströmenden Kühlluft beeinflusst ist.

Die definierte Innenkontur des Außengehäuses folgt bevorzugt zumindest bereichsweise der definierten Außenkontur von elektrischer Antriebseinrichtung und - soweit das Außengehäuse diese umschließt - der Werkzeugeinrichtung. Dabei weisen die Außenkontur und die Innenkontur mit Ausnahme der Bereiche der ersten und zweiten Abstützeinrichtungen einen Mindestabstand voneinander auf, der insbesondere zwischen 1 mm und 3 mm liegt. Der vorbestimmte Mindestabstand zwischen der Außenkontur und der Innenkontur führt zu einer mechanischen Entkopplung des Gehäuses von den Antriebseinrichtungen und bildet darüber hinaus einen Zwischenraum, welcher von Kühlluft durchströmbar ist.

Bei einer bevorzugten Ausführungsform der handführbaren Werkzeugmaschine ist zur Einhaltung des Mindestabstands zwischen der Außenkontur zwischen der elektrischen Antriebseinrichtung und der Werkzeugeinrichtung sowie der Innenkontur des Außengehäuses eine Anzahl N erster Abstützeinrichtungen an der Außenkontur von elektrischer Antriebseinheit und Werkzeugeinrichtung sowie eine Anzahl N zweiter Abstützeinrichtungen an der Innenkontur des Außengehäuses vorgesehen. Die ersten Abstützeinrichtungen und die zweiten Abstützeinrichtungen wirken dabei so zusammen, dass sie die Außenkontur und die Innenkontur in diesem Mindestabstand voneinander halten.

Durch das Zusammenwirken der ersten und zweiten Abstützeinrichtungen wird die Innenkontur und damit das Außengehäuse und insbesondere der Griffbereich der handführbaren Werkzeugmaschine in einem Abstand von der Außenkontur und damit in einem Abstand von der elektrischen Antriebseinheit und der Werkzeugeinrichtung gehalten. Durch diese mechanische Entkopplung wird insbesondere die Übertragung von Vibrationen der Antriebselemente an das Gehäuse reduziert. Die ersten und zweiten Abstützeinrichtungen ermöglichen eine ausreichende Übertragung der Stützkräfte wie der Führungskräfte vom Benutzer auf die Werkzeugmaschine und der Bearbeitungskräfte vom Werkzeug zum Benutzer.

An der Außenkontur der Antriebselemente sind eine Anzahl N erster Abstützeinrichtungen und an der Innenkontur des Außengehäuses eine Anzahl N zweiter Abstützeinrichtungen angeordnet. Dabei wirkt eine erste Abstützeinrichtung so mit jeweils einer zweiten Abstützeinrichtung zusammen, dass die Außenkontur und die Innenkontur - abgesehen von den ersten und zweiten Abstützeinrichtungen - an jeder Stelle einen vorbestimmten Mindestabstand voneinander aufweisen.

Die Anzahl N ergibt sich insbesondere aus der Gestaltung der ersten und zweiten Abstützeinrichtungen. Einen weiteren Einfluss auf die Anzahl N der Abstützeinrichtungen hat die geometrische Gestaltung der Antriebselemente und des Außengehäuses. Ferner ist es bevorzugt, die Abstützeinrichtungen insbesondere so anzuordnen, dass sich sie keinen wesentlichen Strömungswiderstand für die Führung der Kühlluft durch die Werkzeugmaschine darstellen.

Das Außengehäuse der Werkzeugmaschine erstreckt sich entlang einer Längsachse der Werkzeugmaschine. Die Werkzeugeinrichtung ist in einem ersten Endbereich des Außengehäuses, vorzugsweise an einem ersten Ende der elektrischen Antriebseinrichtung angeordnet. Das Außengehäuse erstreckt sich vorzugsweise über die elektrische Antriebseinheit zu wenigstens einem zweiten Endbereich des Außengehäuses hin, welcher bevorzugt von einem zweiten Ende der elektrischen Antriebseinheit aus an einem der Werkzeugeinrichtung gegenüberliegenden Ende der Werkzeugmaschine angeordnet ist. An diesem Endbereich ist wenigstens eine Eintrittsöffnung für Kühlluft angeordnet. Es können auch, abhängig vom Kühlluftbedarf der Werkzeugmaschine, zwei oder mehrere geeignet bemessene Eintrittsöffnungen zum Einströmen der Umgebungsluft angeordnet sein. Das Anordnen dieser wenigstens einen Eintrittsöffnung für Kühlluft an einem der Werkzeugeinrichtung gegenüberliegenden Ende der Werkzeugmaschine ist bevorzugt, da die wenigstens eine Eintrittsöffnung dann entfernt von dem Bereich angeordnet ist, in dem das Bearbeitungswerkzeug eingesetzt wird und sich infolge von Bearbeitungsvorgängen Späne, Staub und dergleichen in der Umgebungsluft befinden, welche nicht zusammen mit der Kühlluft ins Innere der Werkzeugmaschine gelangen sollten.

Zum Erzeugen eines Luftsogs zum Einleiten von Kühlluft durch die wenigstens eine Eintrittsöffnung in die Werkzeugmaschine ist eine Lüftereinrichtung vorgesehen, welche bevorzugt koaxial zur elektrischen Antriebseinheit angeordnet und vorzugsweise unmittelbar von dieser angetrieben wird. Dabei ist vorgesehen, dass einerseits diese Lüftereinrichtung so gestaltet und angeordnet ist und andererseits die elektrische Antriebseinrichtung, die Werkzeugeinrichtung und die Innenkontur des Außengehäuses so gestaltet sind, dass die von der Lüftereinrichtung eingeleitete Kühlluft im wesentlichen parallel zur Rotationsachse der elektrischen Antriebseinheit durch die Werkzeugmaschine strömt und an der Außenkontur der Werkzeugeinrichtung aus dem Außengehäuse ins Freie strömen kann.

Bei einer bevorzugten Ausführungsform der handführbaren Werkzeugmaschine ist die elektrische Antriebseinheit in Richtung ihrer Längsachse von Kühlluft durchströmbar. Die elektrische Antriebseinheit ist dabei vorzugsweise so ausgebildet, dass sie in ihrem Inneren insbesondere in Richtung ihrer Rotationsachse Freiräume aufweist, welche von Kühlluft durchströmbar sind. Vorzugsweise weist die elektrische Antriebseinheit im Bereich ihres von der Werkzeugeinrichtung abgewandten Endes wenigstens eine vorzugsweise axial angeordnete Einströmöffnung auf, in welche Kühlluft bevorzugt parallel zur Rotationsachse in die elektrische Antriebseinheit einströmen kann. Ist die elektrische Antriebseinheit entsprechend der vorangehend als bevorzugt beschriebenen Ausführungsform aufgebaut und in ihrer Längsrichtung von Kühlluft durchströmbar, so überstreicht die durch die wenigstens eine Eintrittsöffnung an diesem Ende der elektrischen Antriebseinrichtung eingeströmte Kühlluft vorzugsweise den Kollektor und/ oder dort angeordnete Kohlebürsten oder eine elektronische Kommutationseinrichtung, den Rotor und den Stator der elektrischen Antriebseinrichtung und nimmt dabei Wärmeenergie von diesen Bauteilen auf.

Bei einer weiter bevorzugten Ausführungsform der handführbaren Werkzeugmaschine, bei welcher die elektrische Antriebseinheit in Richtung ihrer Längsachse von Kühlluft durchströmbar ist, weist diese vorzugsweise in ihrem Inneren insbesondere in Richtung ihrer Rotationsachse von Kühlluft durchströmbare Freiräume auf. Vorzugsweise weist die elektrische Antriebseinheit im Bereich des Kollektors, insbesondere im Bereich von dort angeordneten Kohlebürsten, bevorzugt in Strömungsrichtung vor dem Kollektor und insbesondere den Kohlebürsten wenigstens eine vorzugsweise radial angeordnete Einströmöffnung auf, so dass die Kühlluft den Kollektor und insbesondere die Kohlebürsten im wesentlichen überstreichen kann.

Bei einer weiter bevorzugten Ausführungsform der handführbaren Werkzeugmaschine, bei welcher die elektrische Antriebseinheit in Richtung ihrer Längsachse von Kühlluft durchströmbar ist, weist diese vorzugsweise in ihrem Inneren insbesondere in Richtung ihrer Rotationsachse von Kühlluft durchströmbare Freiräume auf. Vorzugsweise weist die elektrische Antriebseinheit am Rotor und/ oder am Stator ein Polpaket auf, in dessen Bereich, bevorzugt in Strömungsrichtung davor, wenigstens eine vorzugsweise radial angeordnete Einströmöffnung für Kühlluft vorgesehen ist, so dass die vorbei strömende Kühlluft die Polpakete von Rotor und/ oder Stator im wesentlichen überstreichen kann.

Bei einer weiteren bevorzugten Ausführungsform der handführbaren Werkzeugmaschine ist vorzugsweise in Strömungsrichtung hinter dem Stator wenigstens eine bevorzugt radial angeordnete Einströmöffnung für Kühlluft vorgesehen. Bei dieser Ausführungsform wird die im äußeren Bereich der elektrischen Antriebseinheit insbesondere im Polpaket des Stators erzeugte Wärmeenergie von einem zwischen der Außenkontur der elektrischen Antriebseinheit und der Innenkontur des Außengehäuses strömenden Kühlluftstrom aufgenommen. Nach dem Überstreichen der Außenkontur der elektrischen Antriebseinheit insbesondere im Bereich des Polpakets wird die Kühlluft durch diese Einströmöffnung vorzugsweise ins Innere der elektrischen Antriebseinheit und von dort zur Lüftereinrichtung geführt.

Bei einer von den vorangehend beschriebenen bevorzugten Ausführungsformen abweichenden Bauart der elektrischen Antriebseinrichtung ist die wenigstens eine Einströmöffnung ebenfalls so anzuordnen, dass der Kühlluftstrom ins Innere der elektrischen Antriebseinrichtung geführt wird, um Wärmeenergie von den Bauteilen der elektrischen Antriebseinrichtung aufzunehmen. Dabei ist es ebenfalls bevorzugt, mehr als eine in Längsrichtung nacheinander angeordnete Einströmöffnungen vorzusehen, um Wärmeenergie von den Bauteilen der elektrischen Antriebseinrichtung an vorzugsweise mehrere Kühlluftströme abzugeben.

Zur Führung des Kühlluftstroms von der Eintrittsöffnung des Außengehäuses zur Lüftereinrichtung in der Weise, dass diese im wesentlichen parallel zur Längsachse des Außengehäuses im Außen- und Innenbereich der elektrischen Antriebseinheit geführt wird, ist es bevorzugt, dass sich der Außenquerschnitt der elektrischen Antriebseinheit entlang ihrer Rotationsachse in Richtung zur Werkzeugeinrichtung hin nach wenigstens einer Einströmöffnung für Kühlluft vergrößert. An einer solchen Querschnittsvergrößerung in Strömungsrichtung nach einer Eintrittsöffnung kann ein Teil der an der Außenkontur der elektrischen Antriebseinheit entlang strömenden Kühlluft in das Innere der elektrischen Antriebseinheit geführt werden, ohne einen wesentlichen Strömungswiderstand für die an der Innenkontur des Außengehäuses entlang strömende Kühlluft auszubilden.

Ferner ist es bevorzugt, solche Einströmöffnungen für Kühlluft derart auszubilden, dass die daran vorbeiströmende Kühlluft wenigstens zum Teil in die elektrische Antriebseinrichtung geleitet wird. Insbesondere im Zusammenspiel mit einer Vergrößerung des Außenquerschnitts der zu kühlenden Antriebseinrichtungen kann so eine effiziente Strömungsführung der Kühlluft erreicht werden, ohne die Leistung der Lüftereinrichtung beeinträchtigende Strömungshindernisse zu schaffen.

Dabei ist es bevorzugt, dass die in Strömungsrichtung vor der Lüftereinrichtung angeordneten Antriebselemente, und insbesondere die elektrische Antriebseinrichtung derart ausgebildet sind, dass das Druckgefälle bei einer Strömung der Kühlluft insbesondere ins Innere der elektrischen Antriebseinrichtung größer ist, als bei einer Strömung der Kühlluft in dem Zwischenraum, der die elektrische Antriebseinrichtung an deren Außenkontur umgibt und durch den Mindestabstand zwischen der Innenkontur des Außengehäuses und der Außenkontur der Antriebselemente gebildet wird.

Bei einer bevorzugten Ausführungsform der handführbaren Werkzeugmaschine ist die Lüftereinrichtung koaxial am ersten Ende der elektrischen Antriebseinrichtung angeordnet. Damit ist die Lüftereinrichtung in einem Bereich zwischen der elektrischen Antriebseinrichtung und der im wesentlichen starr mit der elektrischen Antriebseinheit gekoppelten Werkzeugeinrichtung positioniert. Die Lüftereinrichtung ist bei einer bevorzugten Ausführungsform so ausgebildet, dass sie die Kühlluft im wesentlichen parallel zur Rotationsachse der elektrischen Antriebseinrichtung ansaugt. Vorzugsweise weist die Lüftereinrichtung ein sich um die Rotationsachse der elektrischen Antriebseinrichtung drehendes Lüfterrad auf. Damit führt die Lüftereinrichtung die Kühlluft insbesondere durch wenigstens eine Einströmöffnung in das Innere der elektrischen Antriebseinrichtung und daran anschließend zum Lüfterrad.

Nach dem Durchströmen der Lüftereinrichtung und insbesondere des Lüfterrads wird der Kühlluftstrom, vorzugsweise durch die Geometrie der Lüfterflügel des Lüfterrads selbst zur Innenkontur des Außengehäuses geführt. Bei einer alternativen Ausführungsform kann die Luftführung auch von Lenkeinrichtungen unterstützt sein. In Verbindung mit der Geschwindigkeit und Richtung der Einströmung der Kühlluft in den Zwischenraum von Innenkontur des Außengehäuses und Außenkontur der Werkzeugeinrichtung wird der Kühlluftstrom von dort vorzugsweise weiterhin im wesentlichen in der ersten Richtung parallel zu derer Längsachse durch die Werkzeugmaschine geführt und nimmt hierbei vorzugsweise zusätzlich auch Wärmeenergie von der Werkzeugeinrichtung auf.

Der Durchmesser des Lüfterrads entspricht dabei bevorzugt in etwa dem Querschnitt der elektrischen Antriebseinrichtung an ihrem der Lüftereinrichtung zugewandten Ende. Dabei weist die Lüftereinrichtung vorzugsweise ein zur Werkzeugeinrichtung hin offenes Gehäuse auf, um ein Ausströmen der Kühlluft in den Zwischenraum von der Außenkontur der Lüftereinrichtung und der Innenkontur des Außengehäuses möglichst nicht zu beeinträchtigen. Das Gehäuse der Lüftereinrichtung ist dabei vorzugsweise ebenfalls im wesentlichen starr mit der elektrischen Antriebseinrichtung und der Werkzeugeinrichtung gekoppelt.

Durch den Mindestabstand zwischen der Außenkontur der Werkzeugeinrichtung und der Innenkontur des Außengehäuses ist der dazwischen gelegene Zwischenraum dort, wo das Außengehäuse im Bereich der Werkzeugeinrichtung endet, zur Umgebung hin offen. Die sich dadurch ergebende wenigstens eine Luftaustrittsöffnung ermöglicht ein Ausströmen der Kühlluft aus dem Außengehäuse.

Bei einer bevorzugten Ausführungsform ist am ersten Endbereich des Außengehäuses ein Randbereich angeordnet, welcher in Richtung zur Werkzeugeinrichtung hin ausgebildet ist, jedoch gleichzeitig den Mindestabstand zwischen dem Außengehäuse und der Außenkontur der Werkzeugeinrichtung einhält. Dabei ist der Randbereich insbesondere strömungsgünstig gestaltet, so dass die Kühlluft dort bevorzugt weitgehend ungehindert ins Freie ausströmen kann. Der nach innen gerichtete Randbereich dient dabei vorzugsweise einerseits als Sichtschutz, andererseits aber auch als Sicherheitseinrichtung, welche ein Eindringen von Gegenständen von der Werkzeugeinrichtung her verhindert. Solche Gegenstände könnten insbesondere einerseits das Ausströmen der Kühlluft behindern und damit zu einer Überhitzung der Werkzeugmaschine führen; andererseits könnte durch einen sich im Zwischenraum von Werkzeugeinrichtung und Außengehäuse befindenden Gegenstand eine mechanische Beeinträchtigung der Lüfterradfunktion herbeigeführt werden, was in der Folge ebenfalls zu einer Überhitzung der Werkzeugmaschine führen könnte.

Die an der Außenkontur der Werkzeugeinrichtung austretende Kühlluft strömt vorzugsweise vom Bearbeiter weg in Richtung der Werkzeugaufnahme und unterstützt dabei ein Abströmen der infolge von Bearbeitungsvorgängen mit Spänen, Staub und dergleichen belasteten Umgebungsluft. Zugleich wird auch die beim Durchströmen der Werkzeugmaschine erwärmte Kühlluft vom Bearbeiter weg geführt.

An der Außenkontur der Werkzeugeinrichtung ist bevorzugt außerhalb des Bereichs, der vom Außengehäuse abgedeckt ist, vorzugsweise wenigstens eine Luftleiteinrichtung angeordnet, welche insbesondere so ausgebildet ist, dass sie eine Luftleitfunktion und/ oder eine Wärmeabgabefunktion im Sinne einer Kühlrippe erfüllt. Die Kühlluft, welche entlang der Außenkontur der Werkzeugeinrichtung aus dem Außengehäuse strömt, wird so vorzugsweise weiter an der Außenkontur der Werkzeugeinrichtung entlang geführt, und kann dabei bevorzugt zusätzliche Wärmeenergie von der Werkzeugeinrichtung aufnehmen und diese dadurch kühlen.

Bei einer bevorzugten Ausführungsform ist die Lüftereinrichtung insbesondere hinsichtlich ihrer Geometrie, Anordnung und Drehzahl so ausgebildet und wirkt insbesondere mit der Innenkontur des Außengehäuses sowie der Geometrie der elektrischen Antriebseinrichtung so zusammen, dass 75 % des Kühlluftstroms, vorzugsweise 80 % des Kühlluftstroms und besonders bevorzugt 90 % der durch die Eintrittsöffnung in den Bereich des Außengehäuses gelangten Kühlluft durch die elektrische Antriebseinheit strömt.

Weitere Vorteile, Merkmale und Anwendungsmöglichkeiten der vorliegenden Erfindung ergeben sich aus der nachfolgenden Beschreibung in Zusammenhang mit den Figuren.

Es zeigt:
- Fig. 1:: eine beispielhafte handführbare Werkzeugmaschine gemäß der vorliegenden Erfindung;
- Fig. 2:: die beispielhafte handführbare Werkzeugmaschine ohne die vordere Außengehäuse-Halbschale;
- Fig. 3:: eine Sicht von oben auf die beispielhafte handführbare Werkzeugmaschine ohne die vordere Außengehäuse-Halbschale; und
- Fig. 4:: eine Sicht von oben auf einen Schnitt durch den vorderen Teil der beispielhaften handführbaren Werkzeugmaschine.

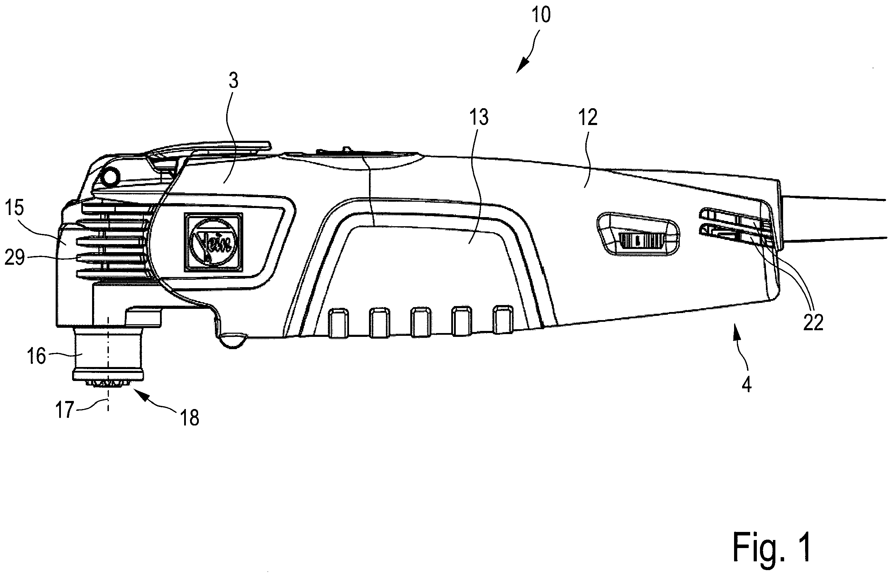

Fig. 1 zeigt eine beispielhafte handführbare Werkzeugmaschine 10 gemäß der vorliegenden Erfindung, welche im Ausführungsbeispiel als Oszillations-Werkzeugmaschine ausgeführt ist. Das Außengehäuse 12 weist eine definierte Innenkontur auf und setzt sich aus zwei Gehäusehälften zusammen, deren Trennungsebene vertikal d. h. parallel zur dargestellten Zeichnungsebene durch die Längsachse der Werkzeugmaschine 10 verläuft. Im zweiten Endbereich 4 des Außengehäuses 12, der der Werkzeugeinrichtung 15 gegenüberliegt, ist in jeder der Gehäusehälften eine Lufteintrittsöffnung 22 angeordnet, welche im dargestellten Ausführungsbeispiel zweiteilig ausgeführt ist. Ferner weist das Außengehäuse 12 einen Griffbereich 13 auf, welchen der Benutzer beim Führen der Werkzeugmaschine umgreift. Das Außengehäuse 12 umschließt eine die Werkzeugmaschine 10 antreibende elektrische Antriebseinrichtung 14 sowie einen Bereich der Werkzeugeinrichtung 15, der in einem ersten Endbereich 3 des Außengehäuses 12 angeordnet ist. Die Werkzeugeinrichtung 15 weist eine um eine Antriebsachse 17 oszillierend angetriebene Antriebswelle 16 auf, wobei die Antriebsachse 17 um 90° gegenüber der Rotationsachse der elektrischen Antriebseinrichtung, die im Ausführungsbeispiel mit der Längsachse der Werkzeugmaschine zusammenfällt, nach unten verschwenkt angeordnet ist. Am Ende der Antriebswelle 16 ist eine Werkzeugaufnahme 18 zur Aufnahme eines geeigneten Bearbeitungswerkzeugs angeordnet.

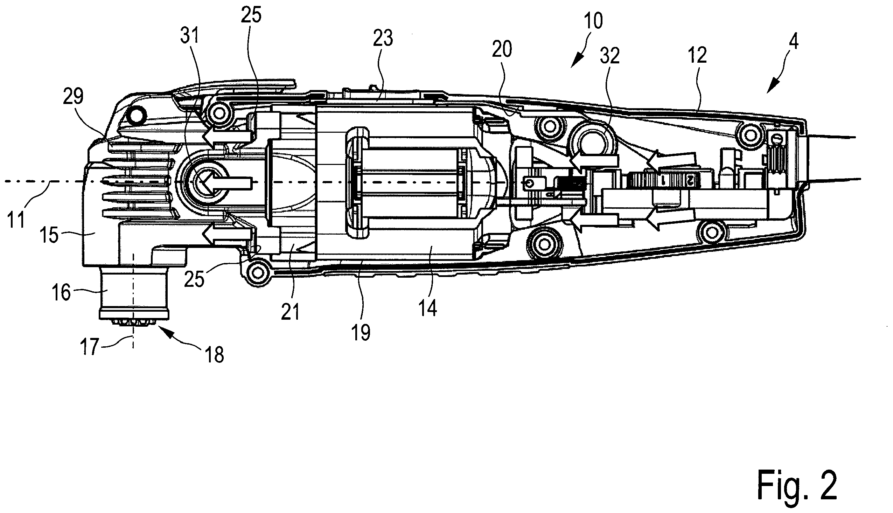

Fig. 2 zeigt die beispielhafte handführbare Werkzeugmaschine 10 aus Fig. 1, wobei die vordere Halbschale des Außengehäuses 12 nicht dargestellt ist. Die Antriebselemente der Werkzeugmaschine 10, insbesondere die elektrische Antriebseinrichtung 14 sowie die daran mittels Schraubverbindungen 25 zu einer weitgehend starren Einheit befestigte Werkzeugeinrichtung 15 sind in dieser Darstellung gezeigt. Zwischen der elektrischen Antriebseinrichtung 14 und der Werkzeugeinrichtung 15 ist eine Lüftereinrichtung 21 angeordnet. Die Lüftereinrichtung 21 ist ebenfalls mittels der Schraubverbindungen 25 starr sowohl mit der elektrischen Antriebseinrichtung 14 als auch mit der Werkzeugeinrichtung 15 verbunden. Die drei Elemente bilden eine mechanisch gekoppelte, starre Einheit.

Die elektrische Antriebseinrichtung 14, die Lüftereinrichtung 21 und die Werkzeugeinrichtung 15, soweit diese im Bereich des Außengehäuses 12 angeordnet ist, weisen eine definierte Außenkontur 19 auf. In der Darstellung in Fig. 2 ist ebenfalls erkennbar, dass der Rand der hinteren Halbschale, welcher die Teilungsebene des Außengehäuses 12 und damit auch einen Teil der Innenkontur 20 des Außengehäuses 12 bildet, in einem Abstand a von den Antriebselementen der Werkzeugmaschine 10 angeordnet ist. Hierdurch ergibt sich zwischen der Innenkontur 20 und der Außenkontur 19 ein Zwischenraum 23, welcher von Kühlluft durchströmbar ist.

An der Werkzeugeinrichtung 15 ist in dem Bereich, der im Außengehäuse 12 (in Fig. 2 nicht dargestellt) aufgenommen ist, eine erste Abstützeinrichtung 31 angeordnet. Eine weitere erste Abstützeinrichtung 32 ist im hinteren Bereich der elektrischen Antriebseinrichtung 14 angeordnet. An gleicher Position sind auf der verdeckten, gegenüberliegenden Seite der Werkzeugeinrichtung 15 und der elektrischen Antriebseinrichtung 14 ebenfalls erste Abstützeinrichtungen 31 und 32 angeordnet.

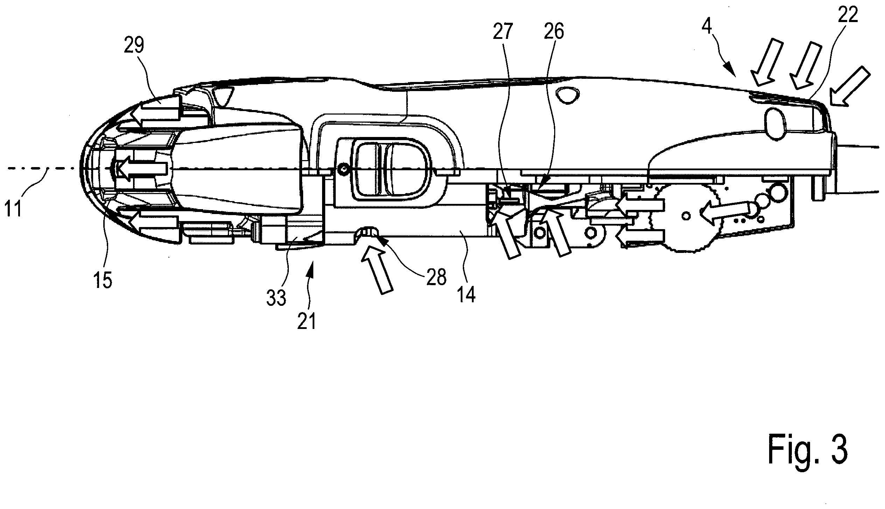

In der in der Fig. 2 dargestellten Schnittdarstellung sind grau dargestellte Pfeile eingezeichnet, welche die Strömung der Kühlluft symbolisieren. Im hinteren Bereich des Außengehäuses 12 und damit im zweiten Endbereich 4 des Außengehäuses 12, der sich von der elektrischen Antriebseinrichtung 14 aus nach hinten erstreckt, ist mindestens eine Eintrittsöffnung 22 angeordnet. Die durch die Eintrittsöffnung 22 eingetretene Kühlluft strömt weitgehend ungehindert über die hinter der elektrischen Antriebseinrichtung 14 angeordneten Steuerungs- und Schalteinrichtungen. Der Strömungsverlauf der Kühlluft durch die Werkzeugmaschine 10 im Bereich der elektrischen Antriebseinrichtung 14 wird nachfolgend in Verbindung mit Fig. 3 näher erläutert. Im Bereich der Werkzeugeinrichtung 15 wird die Kühlluft im Zwischenraum 23 an der Außenkontur 19 der Werkzeugeinrichtung 15 entlang und aus dem Außengehäuse 12 heraus geführt. An der Außenkontur des aus dem Außengehäuse 12 ragenden Bereichs der Werkzeugeinrichtung 15 sind Kühl- und Führungseinrichtungen 29 angeordnet.

Fig. 3 zeigt eine Sicht von oben auf die Werkzeugmaschine, wobei die vordere Gehäuseschale nicht dargestellt ist. Die im Zusammenhang mit dieser Figur erläuterte Luftströmung entspricht jedoch der Strömung, die sich einstellt, wenn beide Gehäuseschalen komplett montiert sind. Die zwischen der elektrischen Antriebseinrichtung 14 und der Werkzeugeinrichtung 15 angeordnete Lüftereinrichtung 21 erzeugt während des Betriebs der elektrischen Antriebseinrichtung 14 eine im wesentlichen parallel zur Antriebsachse 11 gerichtete Luftströmung, wodurch Umgebungsluft durch die im zweiten Endbereich 4 des Außengehäuses 12 angeordnete Eintrittsöffnung 22 angesaugt wird. Diese wird zunächst, wie in der Figur durch Pfeile angedeutet ist, über die hinter der elektrischen Antriebseinrichtung 14 angeordneten Steuerungs- und Schalteinrichtungen geführt. Die infolge der Wirkung der Lüftereinrichtung 21 parallel zur Längsachse durch das Gehäuse strömende Kühlluft strömt axial am hinteren Ende der elektrischen Antriebseinrichtung 14 entlang. Ein erster Teil dieser Kühlluft tritt durch wenigstens eine radial im Bereich des Kollektors an der Außenkontur der elektrischen Antriebseinrichtung 14 angeordnete Einströmöffnung 26 für Kühlluft ein. Die durch die Einströmöffnung 26 in die elektrische Antriebseinrichtung 14 eingetretene Kühlluft überstreicht den Kollektor und nimmt dabei Wärmeenergie von diesem auf.

Ein weiterer Teil der durch das Außengehäuse 12 der Werkzeugmaschine 10 strömenden Kühlluft tritt durch wenigstens eine Eintrittsöffnung 27 für Kühlluft in die elektrische Antriebseinrichtung 14 ein, welche an deren Außenkontur im Bereich zwischen dem Kollektor und den Polpaketen von Rotor und Stator angeordnet ist. Dieser Luftstrom sowie der durch die Einströmöffnung 26 in die elektrische Antriebseinrichtung 14 eingeströmte Luftstrom werden durch das Innere der elektrischen Antriebseinrichtung 14 geführt und nehmen dort nun Wärmeenergie insbesondere von den Polpaketen von Rotor und Stator auf. Der Anteil des Luftstroms, welcher an den Einströmöffnungen 26 und 27 vorbeigeführt wird, wird im Zwischenraum 23 an der Außenkontur der elektrischen Antriebseinrichtung 14 vorbeigeführt, und nimmt Wärmeenergie von der Außenseite der elektrischen Antriebseinrichtung 14 auf. Ein weiterer Teil der durch das Außengehäuse 12 strömenden Kühlluftstrom wird, wie von dem dort dargestellten Pfeil angedeutet ist, in Längsrichtung nach den Polpaketen durch wenigstens eine Eintrittsöffnung 28 in die elektrische Antriebseinrichtung 14 geführt. Dabei nimmt dieser Kühlluftstrom Wärmeenergie von der vorderen Stirnseite der Polpakete von Rotor und Stator auf. Die beispielhafte Ausführungsform der handführbaren Werkzeugmaschine 10 ist ferner so ausgebildet, dass durch den Zwischenraum 23 zwischen der Innenkontur 20 des Außengehäuses 12 und der Außenkontur 19 von elektrischer, Antriebseinrichtung 14 und Lüftereinrichtung 21 ein verbleibender Teil des Kühlluftstroms außen an der Lüftereinrichtung 21 vorbeiströmt.

Bei der beispielhaften Ausführungsform der elektrischen Antriebseinrichtung 14 nimmt deren äußerer Querschnitt nach jeder Eintrittsöffnung 26 und 28 zu, so dass die elektrische , Antriebseinrichtung 14 eine gestufte Außenkontur 19 aufweist.

Im Zusammenspiel mit der entsprechend ausgebildeten Innenkontur 20 des Außengehäuses 12 erhöht sich so nach jeder Eintrittsöffnung 26 und 28 der Strömungswiderstand, wodurch die Kühlluft entsprechend dem dort geringeren Strömungswiderstand ins Innere der elektrischen Anthebseinrichtung 14 geführt wird. Zudem sind die Eintrittsöffnungen 26 und 28 strömungsgünstig derart ausgebildet, dass die Kühlluft daran so umgelenkt wird, dass sich dabei kein die Strömung beeinträchtigender Strömungswiderstand ausbildet.

Nach dem Durch- oder Umströmen der elektrischen Antriebseinrichtung 14 wird der Kühlluftstrom zum in Fig. 3 verdeckten Lüfterrad 30 der Lüftereinrichtung 21 geführt. Die Lüftereinrichtung 21 der beispielhaften Ausführungsform ist so ausgebildet, dass das Lüfterrad 30 den Kühlluftstrom parallel zur Lüfterradachse, welche mit der Antriebsachse bzw. der Rotationsachse 11 der elektrischen Antriebseinrichtung 14 zusammenfällt, ansaugt. Das Lüfterrad 30 ist zumindest teilweise von einem Lüfterradgehäuse 33 der Lüftereinrichtung 21 umgeben. Dieses Lüfterradgehäuse 33 ist so ausgebildet, dass es die Kühluft nach dem Durchströmen des Lüfterrads 30 im radial äußeren Bereich der Lüftereinrichtung 21 im wesentlichen axial von der Lüftereinrichtung 21 weg leitet. Der von der Lüftereinrichtung 21 weg strömende Kühlluftstrom vereinigt sich im Zwischenraum 23 mit dem Teil des Kühlluftstroms, welcher beim Durchströmen der Werkzeugmaschine 10 nicht in die elektrische Antriebseinheit 14 eintritt, sondern zwischen der Außenkontur 19 und der Innenkontur 20 des Außengehäuses 12 entlangströmt.

Der nun nach der Lüftereinrichtung 21 wieder vereinigte Kühlluftstrom strömt weiter im Zwischenraum 23 an der Außenkontur 19 der Werkzeugeinrichtung 15 entlang, wo er am Ende des Außengehäuses 12 aus diesem austritt und von den dort angeordneten Kühl- und Führungseinrichtungen 29 weiter entlang der Außenkontur 19 der Werkzeugeinrichtung 15 geführt wird und dabei Wärmeenergie der Werkzeugeinrichtung 15 aufnimmt.

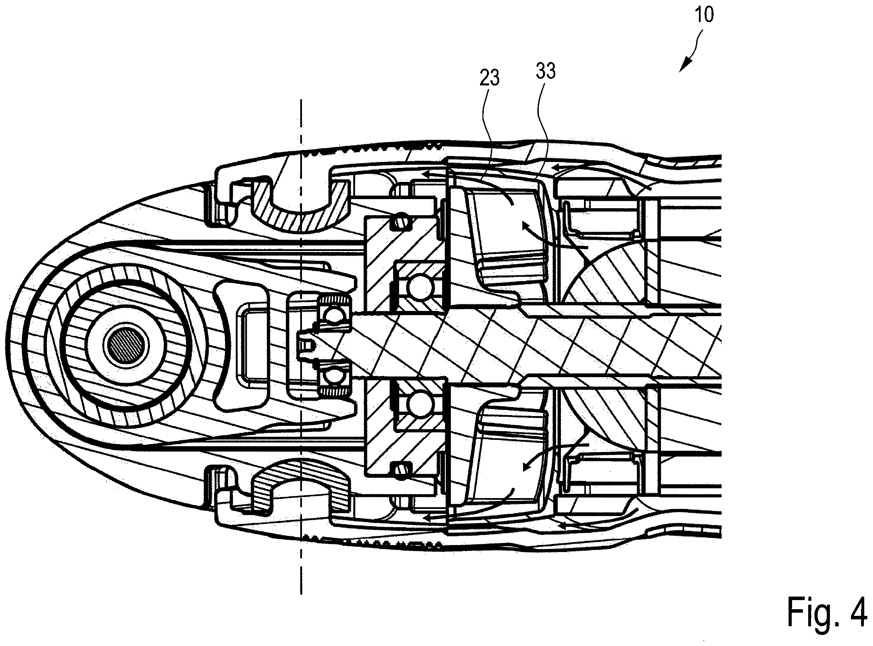

Fig. 4 zeigt eine Sicht von oben auf einen Schnitt durch den vorderen Teil der beispielhaften handführbaren Werkzeugmaschine 10, welcher durch die Antriebsachse 11 der Werkzeugmaschine verläuft. In dieser Schnittdarstellung ist das Lüfterrad 30 der Lüftereinrichtung 21 gezeigt, sowie das Lüfterradgehäuse 33 der Lüftereinrichtung 21 im Schnitt dargestellt. Anhand von Pfeilen ist die Umlenkung des Kühlluftstroms nach dem Durchströmen des Lüfterrads 30 im Lüfterradgehäuse 33 sowie die Vereinigung im Zwischenraum 23 der durch das Innere und entlang der Außenkontur 19 der elektrischen Antriebseinrichtung 14 strömenden Kühlluftströme angedeutet. Am vorderen Ende des Außengehäuses 12 ist ein nach innen gerichteter Randbereich 33 gezeigt, welcher in eine an den Kühl- und Führungseinrichtungen 29 der Werkzeugeinrichtung 15 ausgebildete Aussparung 34 eingreift. Der Randbereich 33 und die Außenkontur der Werkzeugeinrichtung 15 weisen im Bereich der Aussparung 34 einen Mindestabstand voneinander auf.

## Patentansprüche

1. Handführbare Werkzeugmaschine, insbesondere handführbare Oszillations-Werkzeugmaschine mit einem sich im Wesentlichen entlang einer Längsachse erstreckenden Außengehäuse (12), welches einen Griffbereich (13) aufweist, der zum Umgreifen und zum Führen der Werkzeugmaschine (10) durch eine Hand eines Benutzers vorgesehen ist, einer im Wesentlichen in diesem Außengehäuse (12) aufgenommenen elektrischen Antriebseinrichtung (14), welche eine Antriebswelle der Werkzeugmaschine (10) rotierend antreibt, wobei die Rotationsachse (11) der Antriebswelle im Wesentlichen parallel zur Längsachse des Außengehäuses (12) ausgerichtet ist oder mit dieser zusammenfällt, einer Werkzeugeinrichtung (15), welche im Wesentlichen starr mit der elektrischen Antriebseinrichtung (14) gekoppelt ist und welche in einem ersten Endbereich (3) des Außengehäuses (12) angeordnet ist, wobei das Außengehäuse (12) eine definierte Innenkontur (20) aufweist, wobei die elektrische, Antriebseinrichtung (14) und die Werkzeugeinrichtung (15), soweit diese im Bereich des Außengehäuses (12) angeordnet sind, eine definierte Außenkontur (19) aufweisen, wobei diese Außenkontur (19) und die Innenkontur (20) des Außengehäuses (12) einen vorbestimmten Mindestabstand voneinander aufweisen, und wobei wenigstens in einem zweiten Endbereich (4) des Außengehäuses (12), wenigstens eine Eintrittsöffnung (22) für Kühlluft angeordnet ist, wobei eine von der elektrischen Antriebseinrichtung (14) angetriebene Lüftereinrichtung (21) vorgesehen ist, welche Kühlluft durch die wenigstens eine Eintrittsöffnung (22) ansaugt und wobei die von der Lüftereinrichtung (21) angesaugte Kühlluft im Wesentlichen parallel zur Rotationsachse (11) der elektrischen Antriebseinrichtung (14) durch die Werkzeugmaschine (10) strömt und an der Außenkontur (19) der Werkzeugeinrichtung (15) aus dem Außengehäuse (12) ins Freie strömt, **dadurch gekennzeichnet, dass** die elektrische Antriebseinrichtung (14) so ausgebildet ist, dass das Druckgefälle bei einer Strömung der Kühlluft ins Innere der elektrischen Antriebseinrichtung (14) größer ist, als bei einer Strömung der Kühlluft entlang der Strecke zwischen der Innenkontur (20) des Außengehäuses (12) und der Außenkontur (19) der elektrischen Antriebseinrichtung (14).

2. Handführbare Werkzeugmaschine nach Anspruch 1, **dadurch gekennzeichnet, dass**
die elektrische Antriebseinrichtung (14) in Richtung ihrer Rotationsachse (11) von Kühlluft durchströmbar ist.

3. Handführbare Werkzeugmaschine nach einem der vorhergehenden Ansprüche, **dadurch gekennzeichnet, dass** die elektrische Antriebseinrichtung (14) im Bereich des Kollektors wenigstens eine Einströmöffnung (26) für Kühlluft aufweist.

4. Handführbare Werkzeugmaschine nach einem der vorhergehenden Ansprüche, **dadurch gekennzeichnet, dass**
die elektrische Antriebseinrichtung (14) ein Polpaket aufweist, vor welchem wenigstens eine Einströmöffnung (27) für Kühlluft angeordnet ist.

5. Handführbare Werkzeugmaschine nach einem der vorhergehenden Ansprüche, **dadurch gekennzeichnet, dass**
die elektrische Antriebseinrichtung (14) nach dem Polpaket wenigstens eine Einströmöffnung (28) für Kühlluft aufweist.

6. Handführbare Werkzeugmaschine nach einem der Ansprüche 3 bis 5, **dadurch gekennzeichnet, dass**
sich der Querschnitt der elektrischen Antriebseinrichtung (14) entlang ihrer Rotationsachse (11) in Richtung zur Werkzeugeinrichtung (15) hin nach wenigstens einer Einströmöffnung (26, 27, 28) für Kühlluft vergrößert.

7. Handführbare Werkzeugmaschine nach einem der Ansprüche 3 bis 6, **dadurch gekennzeichnet, dass**
wenigstens eine Einströmöffnung (26, 27, 28) für Kühlluft derart ausgebildet ist, dass die daran vorbeiströmende Kühlluft wenigstens zum Teil in die elektrische Antriebseinrichtung (14) geleitet wird.

8. Handführbare Werkzeugmaschine nach einem der vorhergehenden Ansprüche, **dadurch gekennzeichnet, dass**
an einem ersten Ende der elektrischen Antriebseinrichtung (14) und koaxial zu dieser die Lüftereinrichtung (21) angeordnet ist, welche die Kühlluft im Wesentlichen parallel zur Rotationsachse (11) der elektrischen Antriebseinrichtung (14) ansaugt.

9. Handführbare Werkzeugmaschine nach Anspruch 8, **dadurch gekennzeichnet, dass**
die Kühlluft nach dem Durchströmen der Lüftereinrichtung (21) zwischen die Außenkontur (19) der Werkzeugeinrichtung (15) und die Innenkontur (20) des Außengehäuses (12) geleitet wird.

10. Handführbare Werkzeugmaschine nach einem der vorhergehenden Ansprüche, **dadurch gekennzeichnet, dass**
die Kühlluft im Bereich des vorbestimmten Mindestabstands (a) zwischen der Außenkontur (19) der Werkzeugeinrichtung (15) und der Innenkontur (20) des Außengehäuses (12) aus dem Außengehäuse (12) strömt.

11. Handführbare Werkzeugmaschine nach Anspruch 10, **dadurch gekennzeichnet, dass**
am vorderem Ende des Außengehäuses (12) ein Randbereich (33) angeordnet ist, welcher in eine Aussparung (34) an der Kühl- und Führungseinrichtung (29) eingreift.

12. Handführbare Werkzeugmaschine nach Anspruch 10 oder 11, **dadurch gekennzeichnet, dass**
die Kühlluft nach dem Ausströmen aus dem Außengehäuse (12) über die Außenkontur (19) der Werkzeugeinrichtung (15) strömt.

13. Handführbare Werkzeugmaschine nach Anspruch 12, **dadurch gekennzeichnet, dass**
an der Außenkontur der Werkzeugeinrichtung (15) Luftleiteinrichtungen (29) und/ oder Kühleinrichtungen (29) angeordnet sind.

14. Handführbare Werkzeugmaschine nach einem der vorhergehenden Ansprüche, **dadurch gekennzeichnet, dass** die Lüftereinrichtung (21) insbesondere hinsichtlich ihrer Geometrie, Anordnung und Drehzahl so ausgebildet ist und insbesondere mit der Innenkontur (20) des Außengehäuses (12) sowie der Geometrie der elektrischen Antriebseinrichtung (14) zusammenwirkt, dass 75 % des Kühlluftstroms, vorzugsweise 80 % des Kühlluftstroms und besonders bevorzugt 90 % der durch die Eintrittsöffnung (22) in den Bereich des Außengehäuses (12) gelangten Kühlluft durch die elektrische Antriebseinheit (14) strömt.

## Claims

1. A hand-guided machine tool, in particular a hand-guided oscillation machine tool with an outer housing (12) which extends essentially along a longitudinal axis and which has a gripping region (13) which is provided for a hand of a user to grip around and to guide the machine tool (10),
an electric drive device (14) essentially accommodated in this outer housing (12), which electric drive unit (14) drives a drive shaft of the machine tool (10) in a rotating manner, wherein the axis of rotation (11) of the drive shaft is oriented essentially parallel to, or coincides with, the longitudinal axis of the outer housing (12),
a tool device (15) which is essentially rigidly coupled to the electric drive device (14) and which is arranged in a first end region (3) of the outer housing (12),
wherein the outer housing (12) has a defined inner contour (20),
wherein the electric drive device (14) and the tool device (15), insofar as they are arranged in the region of the outer housing (12), have a defined outer contour (19),
wherein this outer contour (19) and the inner contour (20) of the outer housing (12) have a predetermined minimum distance from one another, and
wherein at least one inlet opening (22) for cooling air is arranged in at least a second end region (4) of the outer housing (12),
wherein a fan device (21) driven by the electric drive device (14) is provided which sucks in cooling air through the at least one inlet opening (22) and
wherein the cooling air sucked in by the fan device (21) flows through the machine tool (10) essentially parallel to the axis of rotation (11) of the electric drive device (14) and, at the outer contour (19) of the tool device (15), flows out of the outer housing (12) into the open,
**characterized in that** the electric drive device (14) is constructed in such a way that the pressure gradient is greater when the cooling air flows into the interior of the electric drive device (14) than when the cooling air flows along the path between the inner contour (20) of the outer housing (12) and the outer contour (19) of the electric drive device (14).

2. The hand-guided machine tool according to claim 1, **characterized in that** cooling air can flow through the electric drive device (14) in the direction of the axis of rotation (11) of the latter.

3. The hand-guided machine tool according to any one of the preceding claims, **characterized in that** the electric drive device (14) has at least one inflow opening (26) for cooling air in the region of the collector.

4. The hand-guided machine tool according to any one of the preceding claims, **characterized in that** the electric drive device (14) comprises a pole assembly, in front of which at least one inflow opening (27) for cooling air is arranged.

5. The hand-guided machine tool according to any one of the preceding claims, **characterized in that** the electric drive device (14) comprises at least one inflow opening (28) for cooling air downstream of the pole assembly.

6. The hand-guided machine tool according to any one of claims 3 to 5, **characterized in that** the cross section of the electric drive device (14), along its axis of rotation (11), becomes larger in the direction towards the tool device (15) after at least one inflow opening (26, 27, 28) for cooling air.

7. The hand-guided machine tool according to any one of claims 3 to 6, **characterized in that** at least one inflow opening (26, 27, 28) for cooling air is constructed in such a way that the cooling air flowing past it is at least partially guided into the electric drive device (14).

8. The hand-guided machine tool according to any one of the preceding claims, **characterized in that** the fan device (21) is arranged at a first end of, and coaxially to, the electric drive device (14), which fan device (21) sucks in the cooling air essentially parallel with respect to the axis of rotation (11) of the electric drive device (14).

9. The hand-guided machine tool according to claim 8, **characterized in that** the cooling air, after flowing through the fan device (21), is guided between the outer contour (19) of the tool device (15) and the inner contour (20) of the outer housing (12).

10. The hand-guided machine tool according to any one of the preceding claims, **characterized in that** the cooling air flows out of the outer housing (12) in the region of the predetermined minimum distance (a) between the outer contour (19) of the tool device (15) and the inner contour (20) of the outer housing (12).

11. The hand-guided machine tool according to claim 10, **characterized in that** an edge region (33) which engages in a recess (34) on the cooling and guiding device (29) is arranged at the front end of the outer housing (12).

12. The hand-guided machine tool according to claim 10 or 11, **characterized in that** the cooling air, after flowing out of the outer housing (12), flows over the outer contour (19) of the tool device (15).

13. The hand-guided machine tool according to claim 12, **characterized in that** air guide devices (29) and / or cooling devices (29) are arranged on the outer contour of the tool device (15).

14. The hand-guided machine tool according to any one of the preceding claims, **characterized in that**, in particular with regard to its geometry, arrangement and rotational speed, the fan device (21) is constructed, and in particular interacts with the inner contour (20) of the outer housing (12) as well as the geometry of the electric drive device (14), in such a way that 75% of the cooling air flow, preferably 80% of the cooling air flow and particularly preferably 90% of the cooling air that has passed through the inlet opening (22) into the region of the outer housing (12) flows through the electric drive unit (14).

## Revendications

1. Machine-outil pouvant être guidée à la main, en particulier machine-outil oscillante pouvant être guidée à la main avec un boîtier extérieur (12) s'étendant sensiblement le long d'un axe longitudinal, lequel présente une zone de préhension (13), qui est prévue pour entourer et pour guider la machine-outil (10) par une main d'un utilisateur, un dispositif d'entraînement (14) électrique logé sensiblement dans ledit boîtier extérieur (12), lequel entraîne en rotation un arbre d'entraînement de la machine-outil (10), dans laquelle l'axe de rotation (11) de l'arbre d'entraînement est orienté de manière sensiblement parallèle par rapport à l'axe longitudinal du boîtier extérieur (12) ou coïncide avec celui-ci,
un dispositif d'outil (15), lequel est couplé de manière sensiblement rigide au dispositif d'entraînement (14) électrique et lequel est disposé dans une première zone d'extrémité (3) du boîtier extérieur (12),
dans laquelle
le boîtier extérieur (12) présente un contour intérieur (20) défini,
dans laquelle
le dispositif d'entraînement (14) électrique et le dispositif d'outil (15), ainsi que ceux disposés dans la zone du boîtier extérieur (12), présentent un contour extérieur (19) défini,
dans laquelle
ledit contour extérieur (19) et le contour intérieur (20) du boîtier extérieur (12) présentent une distance minimale prédéfinie l'un de l'autre, et
dans laquelle
au moins une ouverture d'entrée (122) pour de l'air de refroidissement est disposée au moins dans une deuxième zone d'extrémité (4) du boîtier extérieur (12),
dans laquelle un dispositif de ventilateur (21) entraîné par le dispositif d'entraînement (14) électrique est prévu, lequel aspire de l'air de refroidissement par l'au moins une ouverture d'entrée (22) et
dans laquelle
l'air de refroidissement aspiré par le dispositif de ventilateur (21) circule sensiblement de manière parallèle par rapport à l'axe de rotation (11) du dispositif d'entraînement (14) électrique à travers la machine-outil (10) et circule à l'air libre hors du boîtier extérieur (12) au niveau du contour extérieur (19) du dispositif d'outil (15), **caractérisée en ce que**
le dispositif d'entraînement (14) électrique est réalisé de telle sorte que la chute de tension lors d'une circulation de l'air de refroidissement dans l'intérieur du dispositif d'entraînement (14) électrique est supérieure à celle lors d'une circulation de l'air de refroidissement le long du trajet entre le contour intérieur (20) du boîtier extérieur (12) et le contour extérieur (19) du dispositif d'entraînement (14) électrique.

2. Machine-outil pouvant être guidée à la main selon la revendication 1, **caractérisée en ce que**
le dispositif d'entraînement (14) électrique peut être traversé par de l'air de refroidissement en direction de son axe de rotation (11).

3. Machine-outil pouvant être guidée à la main selon l'une quelconque des revendications précédentes, **caractérisée en ce que**
le dispositif d'entraînement (14) électrique présente dans la zone du collecteur au moins une ouverture pour flux entrant (26) pour l'air de refroidissement.

4. Machine-outil pouvant être guidée à la main selon l'une quelconque des revendications précédentes, **caractérisée en ce que**
le dispositif d'entraînement (14) électrique présente un paquet de pôles, devant lequel au moins une ouverture pour flux entrant (27) pour l'air de refroidissement est disposée.

5. Machine-outil pouvant être guidée à la main selon l'une quelconque des revendications précédentes, **caractérisée en ce que**
le dispositif d'entraînement (14) électrique présente après le paquet de pôles au moins une ouverture pour flux entrant (28) pour l'air de refroidissement.

6. Machine-outil pouvant être guidée à la main selon l'une quelconque des revendications 3 à 5,
**caractérisée en ce que**
la section transversale du dispositif d'entraînement (14) électrique s'agrandit le long de son axe de rotation (11) en direction du dispositif d'outil (15) après au moins une ouverture pour flux entrant (26, 27, 28) pour de l'air de refroidissement.

7. Machine-outil pouvant être guidée à la main selon l'une quelconque des revendications 3 à 6,
**caractérisée en ce que**
au moins une ouverture pour flux entrant (26, 27, 28) pour de l'air refroidissement est réalisée de telle manière que l'air de refroidissement circulant le long de celle-ci est acheminé au moins en partie dans le dispositif d'entraînement (14) électrique.

8. Machine-outil pouvant être guidée à la main selon l'une quelconque des revendications précédentes, **caractérisée en ce que**
est disposé au niveau d'une première extrémité du dispositif d'entraînement (14) électrique et de manière coaxiale par rapport à celle-ci le dispositif de ventilateur (21), lequel aspire l'air de refroidissement de manière sensiblement parallèle par rapport à l'axe de rotation (11) du dispositif d'entraînement (14) électrique.

9. Machine-outil pouvant être guidée à la main selon la revendication 8, **caractérisée en ce que**
l'air de refroidissement est acheminé après le passage du dispositif de ventilateur (21) entre le contour extérieur (19) du dispositif d'outil (15) et le contour intérieur (20) du boîtier extérieur (12).

10. Machine-outil pouvant être guidée à la main selon l'une quelconque des revendications précédentes, **caractérisée en ce que**
l'air de refroidissement circule hors du boîtier extérieur (12) dans la zone de la distance minimale (a) prédéfinie entre le contour extérieur (19) du dispositif d'outil (15) et le contour intérieur (20) du boîtier extérieur (12).

11. Machine-outil pouvant être guidée à la main selon la revendication 10, **caractérisée en ce que**
est disposée au niveau de l'extrémité avant du boîtier extérieur (12) une zone de bord (33), laquelle vient en prise avec un évidement (34) au niveau du dispositif de refroidissement et de guidage (29).

12. Machine-outil pouvant être guidée à la main selon la revendication 10 ou 11, **caractérisée en ce que** l'air de refroidissement circule après être sorti du boîtier extérieur (12) en passant par le contour extérieur (19) du dispositif d'outil (15).

13. Machine-outil pouvant être guidée à la main selon la revendication 12, **caractérisée en ce que**
sont disposés des dispositifs d'acheminement d'air (29) et/ou des dispositifs de refroidissement (29) au niveau du contour extérieur du dispositif d'outil (15).

14. Machine-outil pouvant être guidée à la main selon l'une quelconque des revendications précédentes, **caractérisée en ce que**
le dispositif de ventilateur (21) est réalisé en particulier eu égard à sa géométrie, son agencement et sa vitesse de rotation et coopère en particulier avec le contour intérieur (20) du boîtier extérieur (12) ainsi qu'avec la géométrie du dispositif d'entraînement (14) électrique de telle sorte que 75 % du flux d'air de refroidissement, de préférence 80 % du flux d'air de refroidissement, et en particulier de manière préférée 90 % de l'air de refroidissement parvenant dans la zone du boîtier extérieur (12) par l'ouverture d'entrée (22) circulent à travers l'unité d'entraînement (14) électrique.
